# EUROPEAN PATENT APPLICATION

(11) **EP 2 058 170 A2**
(43) Date of publication of application: **13.05.2009**
(21) Application number: 08018367.6
(22) Date of filing: 21.10.2008
(51) Int. Cl.: B60N 3/04

(54) **Improvements in or relating to fixings for carpets, mats and the like**

(30) Priority: 26.10.2007 GB 0721119
(71) Applicant: YKK Europe Limited, London EC2A 4DN (GB)
(72) Inventor: Thomas, Steven, London EC2A 4DN (GB)
(74) Representative: Teasdale, Nicola Joanne

(57) **Abstract**

A fastener for fastening a carpet, mat or other floor covering to a supporting surface, comprises a pair of fastener parts 2, 20 each having planar base 4, 30 which is securable to the covering 42 and/or the supporting surface 46. An array 15, 23 of fastener elements of substantially constant horizontal cross section is provided on the base 4, 30 and extending perpendicular thereto, the elements 14 of one fastener part 2 intercalating with the elements 22 of the other part 20 when the fastener parts are joined with their bases substantially parallel to one another. The minimum surface to surface spacing between adjacent elements of one part is less than the diameter of an element of the other part whereby the parts cannot be separated by movement in the plane of the base but there is substantially no resistance to separation by movement in the direction perpendicular to the base 4, 30.

## Description

The present invention relates to improvements in or relating to fixings for carpets, mats and the like in particular to a fixing for a vehicle carpet or mat such as in an automobile.

In the domestic environment, for securing a fitted carpet it is well known to use a wooden strip which is nailed or glued to the supporting floor and has a plurality of spikes which extend towards the room perimeter at an angle to the vertical. The carpet is stretched and pressed on to the spikes which penetrate the carpet backing weave and so hold the carpet securely. To remove the carpet, it must be peeled away from the spikes, which often results in damage to the carpet edge as the carpet backing material is pulled off the spikes in a direction opposite to the way the spikes are pointing. For a free standing carpet or rug, the main requirement is for preventing creep or slippage of the carpet on the supporting surface, which may be another carpet, and so non-slip polymer layers or surface fasteners may be employed to provide adhesion between the mat and the supporting surface.

In the confined environment of a vehicle, such as a car or automobile, the carpet, that is the plush covering on the vehicle floor, must be secured to the metal floor pan or the like. It is desirable for the carpet to be removable for cleaning or even to change the colour scheme of the vehicle interior, but in many fixing arrangements this is not feasible, and so additional, removable mats are provided. Typically, the carpet may be glued in place on the vehicle floor pan and the mats on the carpet held by clips. The clips can break. Again, a hook and loop type fastener could be used in this environment, but such fastener are susceptible to separation under shear forces and separation requires a peeling motion which involves bending the carpet or mat and can result in damaging force being applied by a car mechanic, for example.

US-3101517-A describes a fastener member having a regular array of upstanding fastener elements or bosses on a flat base. The elements of one member fit between or intercalate with the elements of the other member. The diameter and spacing of the cooperating elements resist movement or separation due to forces acting parallel to the plane of the bases, and the elements are enlarged at their respective outer ends, distal of the base, to resists vertical separation. To engage the fastener parts, the elements of one part are simply pressed into the spaces between the elements on the other part, the outer ends or heads of elements deforming slightly to enable the elements to intercalate. This requirement for heads of the elements to be enlarged imposes limitation on the material of the elements, which must be deformable, and also provides for a more complex manufacturing procedure that may require a two step process to form the enlarged heads.

WO-9322566 describes a fastener in which the fastener elements are tapered, that is the cross-section reduces, towards their heads or outer ends. Also, the elements on the respective fastener parts are differently aligned so that when the two fastener parts are brought together, the elements on at least one of the fastener parts are bent or twisted, that is torsionally flexed, so as to enhance the frictional contact between the fastener parts.

We have realised that the main requirement for a carpet or mat fixing is to prevent horizontal movement, that is movement in the plane of the carpet or mat. It is not necessary to prevent vertical separation from the underlying supporting surface such as the floor, vehicle floor pan, carpet, or the like.

Thus, we provide a fastener for a carpet, mat or other covering (for example. a floor covering) comprising a pair of fastener parts each having a planar base which is securable to the covering or supporting surface, and an array of fastener elements of substantially constant cross section extending perpendicular to the base, the elements of one part intercalating with the elements of the other part when the fastener parts are joined. The minimum surface-to-surface spacing between adjacent elements of one part is less than the diameter of an element of the other part so that the parts cannot be separated by movement in the plane of the base. The elements are shaped so that there is substantially no resistance to separation by movement in the direction perpendicular to the base. Preferably the side faces of elements are perpendicular to the base. Preferably the array of elements is a regular array.

Preferably the elements of one fastener part are of the same cross section as the element of the other part. Preferably the array on one part is the same type of array as on the other part. Preferably, the elements have a substantially circular cross section. Preferably a square array of elements is provided.

Very preferably the elements on one part are of the same dimensions and have the same array shape and spacing as the array of elements on the other part.

Preferably the outer ends of the elements are rounded or tapered to facilitate penetration of one array of elements between the elements of the other array.

The planar base may extend beyond the edge of the array to provide a fixing configuration in the form of a surface that can be sewn of otherwise fixed to a carpet or mat or to a supporting surface. In another form, or as well, the base may be provided with a pin on its underside which can be used to fix the fastener part to a supporting surface. The pin may be barbed for locking the pin in an aperture in the supporting surface or may be held in place by a clip, for example.

The invention will be further described by way of example with reference to the accompanying drawings, in which,
Figure 1 is a plan view of a part of a first fastener part in accordance with the invention,
Figure 2 is a side view of the fastener of Figure 1,
Figure 3 is a perspective view of the fastener of Figure 1,
Figure 4 is a cross-section along the line IV-IV of Figure 5, of first and second fastener parts mated together,
Figure 5 is a cross section on line V-V of Figure 1 and showing two fastener parts mated together, and
Figure 6 is an underneath view of the second fastener part showing a fixing configuration.

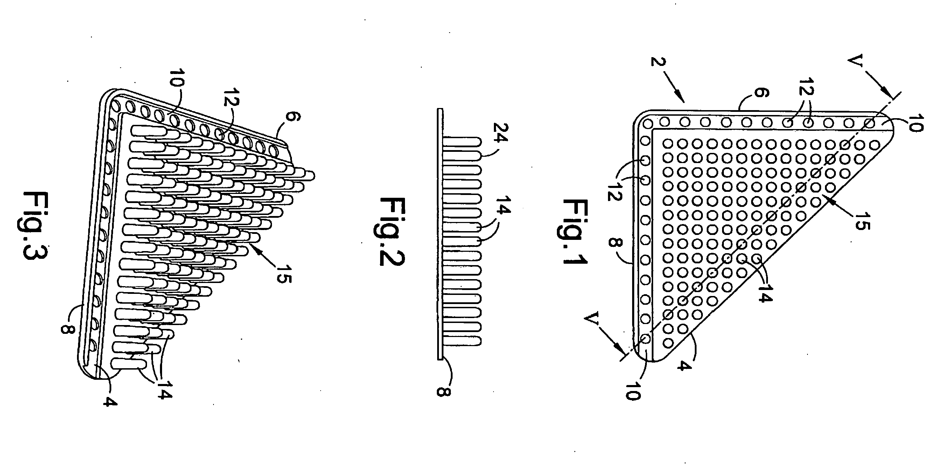

Referring to Figure 1, a fastener part 2 is moulded of a polymer such as polypropylene and comprises a planar base 4 of right-angled triangular plan. In the example shown, the base is about 50mm long on side 6 and side 8. Other shapes of base may be provided, such as rectangular, circular, etc. Fastener part 2 is intended for securing to the carpet, mat or other covering, but may also be affixed to the supporting surface itself as will be apparent hereinafter. The supporting surface may be a floor, such as a vehicle floor pan, a carpet, or the like. Base 4 is about 0.5 to 2 mm thick and preferably about 1 mm thick to provide a limited degree of flexibility. Along two sides 6, 8 of the base 4 a well or recess 10 is formed and through apertures 12 extend through the thickness of the base 4 to provide holes for use in stitching the fastener part to a carpet or supporting surface. Holes 12 need not be provided. It is possible to stitch directly though the material of the base if it is sufficiently thin or soft. Also, the fastener part may be glued in place, for example. Projecting upwards for the base is a plurality of fastener elements 14 which are arranged in a square array 15. Elements 14 are solid cylinders of circular cross section, about 1 to 3mm, preferably about 2 mm in diameter and about 5 to 9mm, preferably about 7mm tall. The outer surfaces of the elements are perpendicular to the base 4.

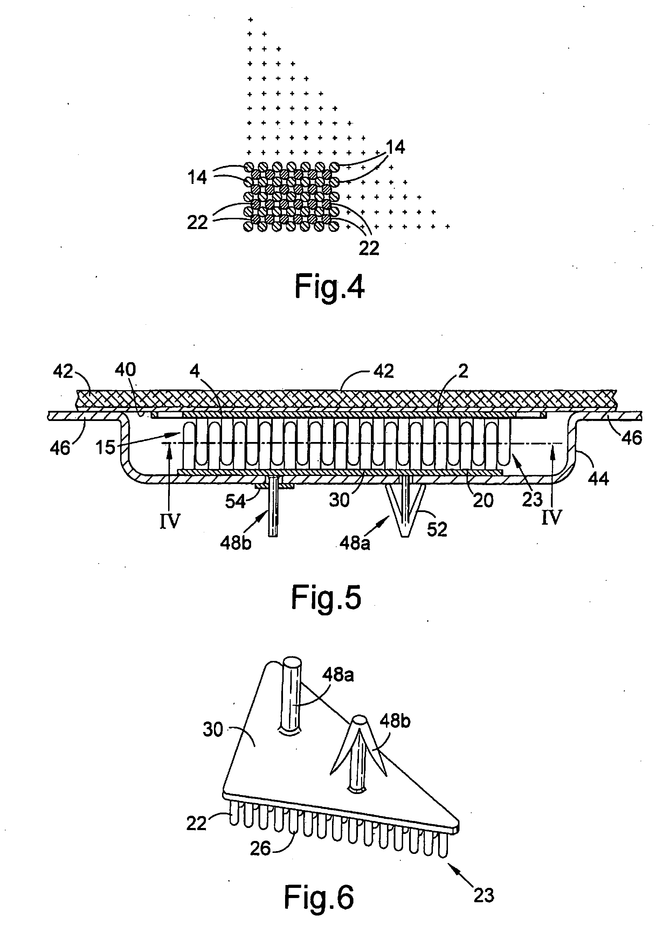

A second fastener part 20 shown in Figure 6 has a planar right-angled triangular base 30 and fastener elements 22 extending perpendicular to the base 30 in an array 23. The base 30 is of approximately the same size as base 2.

The surface-to-surface spacing of the elements 14 on a diagonal of a square of the array 15 is substantially equal to the diameter of an element 22 provided on the co-operating fastener part 20 (see Figure 4). It is actually preferred that the elements of both fastener parts 2, 20 are of the same cross-sectional size and height and the array type and dimension is also the same. Thus, the fastener elements 22 are arranged in a square array 23. Also, the fastener parts 2, 20 can be used interchangeably if desired, two fastener parts 2 or 20 fixing to one another.

It will be appreciated that the arrays 15, 23 need not be regular arrays provided the fastener elements on the respective fastener parts can intercalate. However, we prefer regular arrays of elements to provide for ease of mating the fastener parts.

Referring to Figures 4 and 5, the first fastener part 2 is inverted and attached to the underside 40 of a carpet or mat 42, such as by stitching or gluing as described above. The second fastener part 20 is mounted in a well or recess 44 in a vehicle floor pan 46, the floor pan forming the supporting substrate. The depth of recess 44 accommodates the overall height of the joined fastener parts 2, 20 so that the carpet 42 lays flat across the well 44. The fastener part 20 may be glued in place in the base of the recess 44, or fixed by means of the pins 48 extending though apertures 50 in the base of the recess 44. By way of illustration, one pin 48a is shown with a barb 52 to lock the pin in place, the other pin 48b has a spring clip 54, which grips the pin 48b.

The first fastener part 2 is pressed onto the second fastener part 20 to intercalate the elements 14 with the elements 22 of the second fastener part 20. The outer ends 24, 26 of the elements 14, 22 are tapered, in this case by being rounded so that the elements 24, 26 will slide past one another, the elements of one array each fitting into the centre of a square formed by four adjacent elements of the opposed array.

To allow for tolerance in the fixing of the carpet or covering 42, the recess 44 is larger than the fastener part 20. It will be appreciated that the array 15 of the fastener part 2 need not be aligned precisely over the array 23 of fastener part 20 when the fastener parts are mated together. All that is needed is a suffcient degree of overlap of the arrays to provide resistance to a lateral force tending to displace the carpet or covering.

It can be seen that the elements 22 of the fastener part 20 cannot move laterally, that is, in the plane of the bases 4, 30 because they cannot pass between any adjacent pair of elements 14 of the other fastener part, and vice versa. However, there is little or no resistance to vertical separation, perpendicular to the bases 4, 30 due to the cylindrical nature of the elements 14, 22. Hence the carpet or covering 42 can be removed by simply lifting the carpet vertically in the region of the fastener part 2.

## Claims

1. A fastener for fastening a carpet, mat or other covering to a supporting surface, comprising a pair of fastener parts each having a planar base which is securable to the covering and/or the supporting surface, and an array of fastener elements of substantially constant cross section provided on the base and extending perpendicular thereto, the elements of one fastener part intercalating with the elements of the other part when the fastener parts are joined with their bases substantially parallel to one another, and the minimum surface to surface spacing between adjacent elements of one part being less than the diameter of an element of the other part whereby the parts cannot be separated by movement in the plane of the base but there is substantially no resistance to separation by movement in the direction perpendicular to the base.

2. A fastener as claimed in claim 1, wherein the elements on the fastener parts are cylindrical.

3. A fastener as claimed in claim 1 or 2, wherein the elements of one part are the same cross section, parallel to the base, as the elements of the other part.

4. A fastener as claimed in claim 1, 2 or 3, wherein the elements on at least one of the fastener parts have a substantially circular cross section.

5. A fastener as claimed in any one of claims 1 to 4, wherein a regular array of elements is provided on at least one of the fastener parts.

6. A fastener as claimed in claim 5, wherein the regular array is a square array.

7. A fastener as claimed in claim any one of claims 1 to 6, wherein the array on one fastener part is the same type of array as on the other fastener part.

8. A fastener as claimed in claim 7, wherein the elements on one fastener part are of the same dimension and have the same spacing as the array of elements on the other part.

9. A fastener as claimed in any one of claims 1 to 8, wherein outer ends of the elements are tapered to facilitate penetration of one array of elements between the elements of the other array.

10. A fastener as claimed in claim 9, wherein the ends of the elements are rounded.

11. A fastener as claimed in any one of claims 1 to 10, wherein the base of a fastener part extends beyond the edge of the array of fastener elements to provide a surface that can be sewn of otherwise fixed to a carpet or supporting surface.

12. A fastener part as claimed in any one of claims 1 to 11 wherein the base is provided with a pin on its underside that can be used to fix the fastener part to a supporting surface.

13. A fastener for fastening a carpet or other covering to a supporting surface, the fastener comprising first and second parts attachable respectively to the carpet and the supporting surface, each part having a base and fastening elements which extend substantially perpendicular to the base, the elements intercalating to hold the fastener parts together against a force in the plane of the bases, but allowing separation of the fastener parts by a force perpendicular to the bases.

14. A fastener as claimed in claim 13, wherein at least some of said fastening elements have outer surfaces that are perpendicular to the base.

15. A fastener as claimed in claim 13, wherein at least some of said fastening elements have outer surfaces that are tapered with respect to an axis perpendicular to the base.
